# EUROPEAN PATENT SPECIFICATION

(11) **EP 1 854 666 B1**
(45) Date of publication and mention of the grant of the patent: **18.12.2013**
(21) Application number: 06710310.1
(22) Date of filing: 03.02.2006
(51) Int. Cl.: B60Q 9/00, G01S 17/87, G01S 17/93

(54) **SYSTEM FOR THE DETECTION OF OBJECTS LOCATED IN AN EXTERNAL FRONT-END ZONE OF A VEHICLE, WHICH IS SUITABLE FOR INDUSTRIAL VEHICLES**
SICH FÜR INDUSTRIEFAHRZEUGE EIGNENDES SYSTEM ZUR ERFASSUNG VON IN EINEM EXTERNEN FRONTENDBEREICH EINES FAHRZEUG BEFINDLICHEN OBJEKTEN
SYSTEME DESTINE A LA DETECTION D'OBJETS SITUES DANS UNE ZONE EXTERIEURE FRONTALE D'UN VEHICULE, APPLICABLE A DES VEHICULES INDUSTRIELS

(30) Priority: 04.02.2005 ES 200500222
(43) Date of publication of application: 14.11.2007
(73) Proprietor: Fico Mirrors, SA, 08028 Barcelona (ES)
(72) Inventor: DAURA LUNA, Francesc, E-08192 Sant Quirze del Vallès (ES); CASANOVAS SURIOL, Selma, E-43720 L' Arboç Del Penedès (ES)
(74) Representative: Gislon, Gabriele
(86) International application number: PCT/IB2006/000198
(87) International publication number: WO 2006/082503

(56) References cited:
- EP-A- 1 414 003
- EP-A1- 0 945 305
- WO-A-2004/010402
- JP-A- 07 304 390
- US-A- 4 833 469
- US-A1- 2004 148 057
- US-B1- 6 327 536
- US-B1- 6 580 385
- US-B1- 6 583 403

## Description

### Technical Field

The present invention concerns a system for the detection of objects being located in an external front zone of a vehicle, which is suitable for industrial vehicles and able to distinguish the detection of pedestrians from that of other objects.

### Background Art

The industrial vehicles such as coaches, buses, etc. have because of their height a front zone being outside the visual range of the driver, a.k.a. blind angle, and this can be the cause of different types of accidents both when pedestrians invading this zone happen to be inadvertedly run over and when the vehicle bumps against objects not possibly having been seen by the driver, specially when starting to move the vehicle.

Different proposals have been known which are aimed at improving the detection of the presence of objects in blind areas or zones being external to the vehicle and outside the visual range of the driver.

Many of said proposals are simply addressed at the detection of objects without distinguishing them from each other and hence not offering the possibility of reacting in different manners or offering different responses depending on the object being detected.

Other more elaborate proposals certainly are aimed at at least to a certain extent distinguishing or recognizing the objects being detected.

Such is the case with patent US-A-6727807 concerning a system and method for alerting a motorcar driver to a traffic condition. The system comprises at least one camera being focused towards a front zone with respect to the motorcar, and a control unit being able to analyze and identify images being received from the camera and based on said analysis determine if the detected object is such as to require a response on the part of the driver. The system also comprises a display (generally the actual windscreen of the vehicle) for if thus required by the control unit highlighting the detected object in a superimposed manner on the image being seen by the driver. With said system it becomes possible to distinguish between the detected objects such as pedestrians, traffic signs, vehicles, etc. after the analysis of the captured images on the part of the control unit and by means of an adequate software. Said patent proposes a very concrete application for a detection system being based on the previously commented highlighting of the detected objects on a display.

Patent US-A-6744354 proposes a collision protection system for the protection of pedestrians. Said system incorporates a number of sensors for after a collision detecting the width, speed and location of the contacted object in order to distinguish if this latter is a pedestrian or an object of another kind and to thus be in a position to take the necessary steps to act in consequence in order to protect the pedestrian in the first case or to protect the users of the vehicle in the second case. The major disadvantage of said proposal lies in the fact that the detection takes place after the collision, the consequence of this being that even if the detection systems have a very short response time a substantial damage can have already been caused by the time when said systems carry out their action, this above all applying to such a case as the running over of a pedestrian.

Another system being representative of the prior art is the one being proposed by patent US-A-6687577. Said patent concerns a classification system (and method) being installed in a vehicle and comprising at least one sensor for detecting obstacles and acquiring at least a number of pieces of information regarding the boundaries of said obstacles as regards their height and width. The system also comprises a controller being able to classify said objects by means of an adequate logic and depending on their dimensions.

Other devices for the detection.of obstacles from a vehicle are disclosed in documents US-A-2001/0019356 proposing to use a plurality of cameras for detecting an object as based on a three-dimensional information, and US-A-2004/0056950 proposing the use of two stereoscopic cameras and an obstacle presence decision unit.

None of the prior art documents proposes to jointly use two or more detection systems of different kinds being each of them adequated to the type of object to be detected, said documents rather providing one only type of detection system by whose means all kinds of objects are detected, these latter being distinguished or classified after an ulterior analysis, or else providing for combining systems of the same kind.

The systems being proposed by the aforementioned prior art documents in general are not specifically applied to industrial vehicles and hence they have not been particularized in order to overcome the specific vision problems affecting such vehicles.

### Disclosure of the Invention

An alternative to the prior art is hence needed in order to fill its gaps by taking into account the different kinds of objects to be detected not only a posteriori after the detection but also a priori by means of using the detection system (or subsystem) being most suitably adequate for each type of object.

The present invention concerns a system for the detection of objects being located in an external front zone of a vehicle, which is suitable for industrial vehicles and able to cover at least one blind angle.

The system as per the basic embodiment comprises:
- a) a first detection subsystem being able to detect the presence of moving objects or of those having a limited maximum height in a first surveillance area of said external front zone, said first detection subsystem being preferentially focused on the detection of pedestrians so as to avoid running them over; and
- b) a second detection subsystem being able to detect the presence of objects in a second surveillance area of said external front zone and to acquire information regarding at least the bulk of said objects being present in said second surveillance area, said second detection subsystem being preferentially focused on the detection of obstacles whose bulk does not allow to pass over them and could cause a structural damage to the vehicle.

The first detection subsystem is solely aimed at the identification of pedestrians or other possible moving objects (such as animals, for example) entering its detection area, but not at measuring them since the actions to be carried out when facing one of said detections have to be immediate and aimed at protecting the pedestrian, the mere detection being enough for such a purpose.

As regards the aforementioned second detection subsystem the actions to be carried out when facing the detections being obtained by it are more varied than those of the first subsystem. Said actions depend on the dimensions of the detected object. The acquired information regarding the bulk of said objects is therefore important. For example if the detected obstacle is small it is possible for the vehicle to pass over it with no substantial contact between them and hence without the occurrence of a substantial damage, but if it is very large or such as to surpass a given range of dimensions it is imperative to carry out a braking action in order to avoid colliding with it, and the obstacle will have to be avoided or removed from the roadway.

The two aforementioned surveillance areas can have an overlapping portion of larger or smaller dimensions depending on the vehicle.

The invention is fundamentally addressed at vehicles of large dimensions such as buses, trucks, etc.

The system is particularly indicated (although not limited to) for the cases wherein the vehicle's initial position is a stationary one, such as for example when a bus has halted at a stop, the system being for such a purpose able to detect obstacles being located in the front zone being external to the vehicle, said obstacles namely being outside the driver's field of view. After said detection the system prevents the vehicle from starting to move and it also alerts the driver to the presence of the obstacle having caused said prevention.

Both the first and the second subsystem can act both in a separate and in a combined manner, this latter being the preferred case.

It is possible to add to the two proposed subsystems other additional subsystems like those having been set forth above, said other additional subsystems being possibly located in other zones of the vehicle, or else it is possible to add other additional subsystems being different from those having been proposed above, said other additional subsystems in this case being adequated to the detection of another kind of objects and in a position to acquire from them information regarding another kind of parameters not necessarily being the bulk, such as temperature, brightness, speed, etc.

### Brief Description of the Drawings

The aforementioned and other features and advantages of the invention will be best made apparent in the light of the following description of an exemplary embodiment being illustrated in the enclosed drawings and of a merely illustrative and nonlimiting nature.

In said drawings:
Fig. 1 diagrammatically depicts a pedestrian detection situation wherein said detection is carried out by means of the first detection subsystem being proposed by the present invention and installed in a bus; and
Fig. 2 diagrammatically depicts an obstacle detection situation wherein said detection is carried out by means of the second detection subsystem being proposed by the present invention and installed in a truck.

### Detailed Description of Exemplary Embodiments

As shown in the figures, the present invention concerns a system for the detection of objects being located in an external front zone of a vehicle, said detection system being applicable to industrial vehicles and covering at least a blind angle.

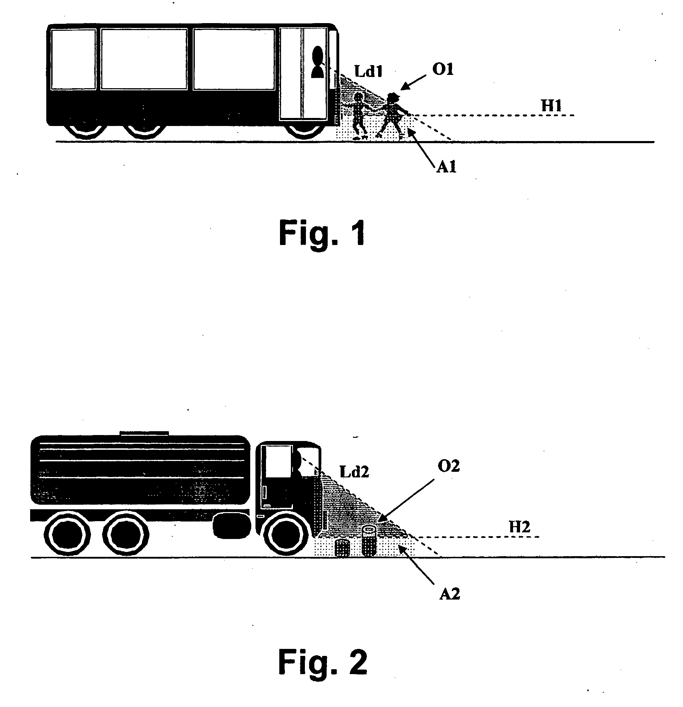

The system in a basic version comprises:
- a first detection subsystem (see Fig. 1) being able to at least detect the presence of objects O1 being in motion or having a limited maximum height, preferentially pedestrians, in a first surveillance area A1 of said external front zone; and
- a second detection subsystem (see Fig. 2) being different and able to at least detect the presence of objects O2 in a second surveillance area A2 of said external front zone and to acquire information regarding at least the bulk of said objects O2 being present in said second surveillance area A2.

Said first detection subsystem comprises a detection device being able to acquire from the outside tokens of information indicating a presence and being hence representative of the existence of one or more objects O1 within said first surveillance area A1, and an electronic system comprising a system for processing and analyzing input signals being obtained by means of said detection device and representative of said tokens, said electronic system being able to generate output signals as a function of the result of said analysis. Said processing and analyzing system of said first detection subsystem is able to process said input signals as per a pattern recognition algorithm.

Said output signals can be used to carry out different actions in response to said detections, such as activating a light and/or sound alarm signal or even carrying out a braking action and preventing the motion of the vehicle (as per the different available means) in order to thus prevent a potential running over.

The detection device being used by said first detection subsystem is an electromagnetic detection device preferentially being a camera (not shown) since this is the type being considered as the best suited one for the detection of pedestrians O1, although other kinds of detection devices being considered as suitable by a person being ordinarily skilled in the art are also possible, such as the magnetic field distortion detecting devices, the devices being arranged for emitting/receiving different radiations, etc.

The aforementioned first surveillance area A1 extends at least from the ground up to a predetermined minimum detection height H1 being adjusted for detecting the presence of pedestrians O1, i.e. of about 60 cm, since this is the height being considered as the minimum one for a pedestrian. This applies above all to the zone of the first surveillance area A1 being farther away from the vehicle since, as can be seen in Fig. 1, the first area A1 preferentially extends in the zone being closest to the vehicle from the ground up to a line just underneath the lower boundary of the direct vision field of the driver (which can vary depending on the vehicle's geometry and the driver's height, for example). Said Fig. 1 also shows the minimum height H1 as well as the line Ld1 delimiting the field to be covered in this case by the camera being incorporated in the bus being shown in Fig. 1. The zones being located beyond the point where both lines H1, Ld1 intersect each other can be ignored and hence not included in the first surveillance area A1 since it is very unlikely for a pedestrian to enter said zones.

If a higher safety is desired said minimum height H1 can be set to a value of less than the aforementioned 60 cm thus covering the case that could arise if for example a pedestrian incidentally were in a lying, sitting or crouching position in front of the vehicle.

As regards the aforementioned second detection subsystem this latter comprises a detection device being able to acquire from the outside tokens of information indicating a presence and being hence representative of the existence of one or more objects O2 within said second surveillance area A2 and of the bulk of said object(s), and an electronic system comprising a system for processing and analyzing input signals being obtained by means of said detection device and representative of said tokens, said electronic system being able to generate output signals as a function of the result of said analysis.

The processing and analyzing system of one or both detection subsystems is able to process said input signals as per at least two processing algorithms in order to improve the consistency of the results.

Fig. 2 illustrates a truck incorporating said second detection subsystem, wherein the second detection area A2 is shown as a shaded area and delimited by a line Ld2 extending from a point or line just underneath the lower boundary of the direct vision field of the driver up to the ground.

The system as per the invention is based on the simultaneous use of the two aforementioned detection subsystems for controlling a front or rear end zone of a vehicle and in both cases detecting both pedestrians or animals in motion and stationary obstacles.

Coming back to Fig. 2, for this case there exists a predetermined minimum detection height H2 being representative of the height being at least to be had by the object to be detected. Said height H2 can be adjusted at will and will normally have a value being such that the objects having a height of less than said value can be cleared by passing over them without damaging the vehicle, said value hence depending on the vehicle incorporating the second subsystem.

The zones being located beyond the point where both lines H2, Ld2 intersect each other can be ignored and hence not included in the second surveillance area A2, this latter having enough amplitude taking into account that the vehicle is initially stopped.

Like in the case of the first detection subsystem the aforementioned output signals of the processing system can be used for carrying out different actions in response to said detections, such as activating an alarm signal, preventing the motion of the vehicle, etc.

It is important to ascertain the bulk of the detected object O2 in order to based on it decide if it is or if it is not possible to pass over the object O2 with no damage occurring.

A monocular detection system is not enough for carrying out a bulk estimation since it does not provide enough information.

There exist different alternatives allowing to carry out said bulk estimation. One of them is the one being proposed by the present invention for an exemplary embodiment and is based on the use of active vision techniques. Said detection device for such a purpose comprises a light emitter (not shown) being able to emit light being structured with a given pattern (generally infrared light) onto said second surveillance area A2, and a receiver (not shown) being able to receive said light upon its having been reflected from said object or objects O2 being present in the second surveillance area A2, and the electronic system is able to recognize the bulk of said object or objects O2 based on the time being taken by each light beam pertaining to said pattern between the point in time when it is emitted and the point in time when it is received by said receiver.

Another alternative allowing to carry out the aforementioned bulk estimation is the one being based on a depth estimation based on the parallax. The present invention implements said alternative for another exemplary embodiment wherein the detection device being used by said second detection subsystem is an electromagnetic detection device preferentially being a camera (not shown). Said camera is able to acquire images being representative of the presence of said object or objects O2 in said second surveillance area A2 from at least two different positions being sufficiently far away from each other and not aligned with the object or objects O2 such as to produce said parallax, and said electronic system is able to recognize the bulk of said object or objects O2 based on said images.

The motion being needed in order to obtain the aforementioned depth estimation, i.e. the aforementioned acquisition of images from at least two different positions, can be provided by the very vehicle if this latter is in motion, or for the case wherein the vehicle is in a stopped state by means of a movable device (not shown) being proposed by the present invention and having said camera fitted onto it, said device being in its turn fitted onto said vehicle in order to thus allow the camera to move along a horizontal axis and to hence allow to carry out said acquisition of images from at least two different positions.

The proposed system is able to operate in a correct manner under all kinds of adverse conditions as regards both the lighting conditions, the use of artificial light sources being proposed at this respect, and the weather conditions either with snow, fog or rain, at which respect the subsystem incorporates those devices being such as to prevent it from being influenced by such adverse conditions.

The system also incorporates self-diagnosing means for detecting any possible malfunction in it or adverse operating conditions such as for example the presence of dirt on the detection devices thus impairing their correct operation, or the aforementioned adverse conditions.

A preferred way for using the system being proposed by the present invention is the one that contemplates its activation upon having detected the intention to start the vehicle, said intention being for example detected by means of detecting the engagement of a gear of the gearbox. In the case wherein after said activation a detection takes place which is considered as dangerous (for a pedestrian or for the very vehicle) the system will temporally prevent the vehicle from starting to move.

A person being ordinarily skilled in the art would be in a position to introduce changes and modifications in the exemplary embodiments having been described above without departing from the scope of the invention as defined in the accompanying claims.

## Claims

1. A system for the detection of objects being located in an external front zone of a vehicle, said detection system being applicable to industrial vehicles and covering at least a blind angle comprising in combination at least:
- a first detection subsystem being able to at least detect the presence of objects (O1) being in motion or having a limited maximum height in a first surveillance area (A1) of said external front zone; and
- a second detection subsystem being different and able to at least detect the presence of objects (O2) in a second surveillance area (A2) of said external front zone and to acquire information regarding at least the bulk, i.e. the volume of said objects (02) being present in said second surveillance area (A2), wherein said second detection subsystem is focused on the detection of obstacles whose bulk does not allow to pass over them and could cause a structural damage to the vehicle and comprises at least one detection device being able to acquire from the outside tokens of information indicating a presence and being hence representative of the existence of one or more objects (02) within said second surveillance area (A2) and of at least the bulk of said object(s), and an electronic system comprising at least one system for processing and analyzing input signals being obtained by means of said detection device and representative of said tokens, said electronic system being able to generate output signals as a function of the result of said analysis;
said system for the detection of objects being **characterised in that** said detection device is a camera able to acquire images being representative of the presence of said object or objects (02) in said second surveillance area (A2) from at least two different positions being sufficiently far away from each other and not aligned with the object or objects (02) such as to produce parallax, and **in that** said electronic system is able to recognize the volume of said object or objects (02) based on said images.

2. A system as per claim 1, **characterized in that** said camera is fitted onto a movable device being in its turn fitted onto said vehicle in order to thus allow the camera to acquire said images from said at least two different positions even with the vehicle in a fully stopped position.

3. A system as per claim 2, **characterised in that** said movable device is fitted onto said vehicle in order to thus allow the camera to move along a horizontal axis.

4. A system as per claim 1, **characterized in that** said first detection subsystem comprises at least one detection device being able to acquire from the outside tokens of information indicating a presence and being hence representative of the existence of one or more objects (O1) within said first surveillance area (A1), and an electronic system comprising at least one system for processing and analyzing input signals being obtained by means of said at least one detection device and representative of said tokens, said electronic system being adapted to generate output signals as a function of the result of said
analysis.

5. A system as per claim 4, **characterized in that** said detection device is an electromagnetic detection device.

6. A system as per claim 5, **characterized in that** said electromagnetic detection device is a camera.

7. A system as per claim 4, **characterized in that** said detection device is a magnetic field distortion detecting device.

8. A system as per claim 6 or 7, **characterized in that** said first surveillance area (A1) extends at least from the ground up to a predetermined minimum detection height (H1).

9. A system as per claim 8, **characterized in that** said predetermined minimum detection height (H 1) is adjusted for detecting the presence of pedestrians (O1).

10. A system as per claim 1, **characterized in that** said two surveillance areas (A1) and (A2) comprise an overlapping portion.

11. A system as per claim 1, **characterized in that** at least the processing and analyzing system of one of said first and second detection subsystems is able to process said input signals as per at least two processing algorithms.

12. A system as per claim 4, **characterized in that** said processing and analyzing system of said first detection subsystem is able to process said input signals as per a pattern recognition algorithm.

## Patentansprüche

1. System zur Erfassung von sich in einem externen Frontbereich eines Fahrzeugs befindlichen Objekten, wobei das genannte Erfassungssystem für Industriefahrzeuge verwendbar ist und mindestens einen toten Winkel abdeckt, umfassend in Kombination mindestens:
- ein erstes Erfassungssubsystem, welches mindestens die Anwesenheit von Objekten (O1), die in Bewegung sind oder eine beschränkte maximale Höhe aufweisen, in einer ersten Überwachungsfläche (A1) des genanntes externen Frontbereichs erfassen kann; und
- ein zweites unterschiedliches Erfassungssubsystem, welches mindestens die Anwesenheit von Objekten (02) in einer zweiten Überwachungsfläche (A2) des genanntes externen Frontbereichs erfassen und Information bezüglich mindestens der Größe, d.h. des Volumens der genannten Objekten (O2), die in der genannten zweiten Überwachungsfläche (A2) anwesend sind, erhalten kann, wobei das genannte zweite Erfassungssubsystem sich auf die Erfassung von Hindernissen konzentriert, deren Größe es nicht erlaubt solche zu überfahren und die einen Strukturschaden im Fahrzeug verursachen könnten, und mindestens eine Erfassungsvorrichtung, welche von außen Informationstoken erhalten kann, welche eine Anwesenheit anzeigen und daher die Existenz eines Objekts oder mehrerer Objekte (02) innerhalb der genannten zweiten Überwachungsfläche (A2) und mindestens die Größe des genannten Objekts oder der genannten Objekte darstellen, und ein elektronisches System umfassend mindestens ein System zum Verarbeiten und Analysieren von Eingangssignalen, welche durch die genannte Erfassungsvorrichtung erhalten werden und die genannten Token darstellen, umfasst, wobei das genannte elektronische System Ausgangssignale in Abhängigkeit von dem Ergebnis der genannte Analyse erzeugen kann;
wobei das genannte System zur Erfassung von Objekten **dadurch gekennzeichnet ist, dass** die genannte Erfassungsvorrichtung eine Kamera ist, welche Bilder, die die Anwesenheit des genannten Objekts oder der genannten Objekte (02) in der genannten zweiten Überwachungsfläche (A2) darstellen, aus mindestens zwei unterschiedlichen Stellungen erhalten kann, welche weit genug voneinander sind und nicht mit dem Objekt oder den Objekten (02) fluchten, so dass eine Parallaxe verursacht wird, und dass das genannte elektronische System das Volumen des genannten Objekts oder der genannten Objekte (02) basierend auf den genannten Bilder erkennen kann.

2. System nach Anspruch 1, **dadurch gekennzeichnet, dass** die genannte Kamera auf einer beweglichen Vorrichtung eingebaut ist, welche wiederum auf dem genannten Fahrzeug eingebaut ist, um so der Kamera zu ermöglichen die genannte Bilder aus den genannten mindestens zwei unterschiedlichen Stellungen sogar mit dem Fahrzeug in einer völlig gestoppten Stellung zu erhalten.

3. System nach Anspruch 2, **dadurch gekennzeichnet, dass** die genannte bewegliche Vorrichtung auf dem genannten Fahrzeug eingebaut ist, um so der Kamera zu ermöglichen sich entlang einer horizontalen Achse zu bewegen.

4. System nach Anspruch 1, **dadurch gekennzeichnet, dass** das genannte erste Erfassungssubsystem mindestens eine Erfassungsvorrichtung, welche von außen Informationstoken erhalten kann, welche eine Anwesenheit anzeigen und daher die Existenz eines Objekts oder mehrerer Objekte (O1) innerhalb der genannten zweiten Überwachungsfläche (A1) darstellen, und ein elektronisches System umfassend mindestens ein System zum Verarbeiten und Analysieren von Eingangssignalen, welche durch die genannte mindestens eine Erfassungsvorrichtung erhalten werden und die genannten Token darstellen, umfasst, wobei das genannte elektronische System dazu angepasst ist, Ausgangssignale in Abhängigkeit von dem Ergebnis der genannte Analyse zu erzeugen.

5. System nach Anspruch 4, **dadurch gekennzeichnet, dass** die genannte Erfassungsvorrichtung eine elektromagnetische Erfassungsvorrichtung ist.

6. System nach Anspruch 5, **dadurch gekennzeichnet, dass** die genannte elektromagnetische Erfassungsvorrichtung eine Kamera ist.

7. System nach Anspruch 4, **dadurch gekennzeichnet, dass** die genannte Erfassungsvorrichtung eine die Magnetfeldverzerrung erfassende Vorrichtung ist.

8. System nach Anspruch 6 oder 7, **dadurch gekennzeichnet, dass** die genannte erste Überwachungsfläche (A1) sich mindestens von dem Boden bis zu einer vorgegebenen minimalen Erfassungshöhe (H1) erstreckt.

9. System nach Anspruch 8, **dadurch gekennzeichnet, dass** die genannte vorgegebene minimale Erfassungshöhe (H1) zum Erfassen von der Anwesenheit von Fußgängern (O1) eingestellt ist.

10. System nach Anspruch 1, **dadurch gekennzeichnet, dass** die genannten zwei Überwachungsflächen (A1) und (A2) eine überlappende Stellung umfassen.

11. System nach Anspruch 1, **dadurch gekennzeichnet, dass** mindestens das Verarbeitungs- und Analysesystem einer des genannten ersten oder des genannten zweiten Erfassungssubsystems die genannten Eingangssignale gemäß mindestens zwei Verarbeitungsalgorithmen verarbeiten kann.

12. System nach Anspruch 4, **dadurch gekennzeichnet, dass** das genannte Verarbeitungs- und Analysesystem des genannten ersten Erfassungssubsystem die genannten Eingangssignale gemäß einem Mustererkennungsalgorithmus verarbeiten kann.

## Revendications

1. Système pour la détection d'objets étant situés dans une zone avant externe d'un véhicule, ledit système de détection étant applicable aux véhicules industriels et couvrant au moins un angle mort comprenant en combinaison au moins :
- un premier sous-système de détection étant apte, au moins, à détecter la présence d'objets (01) en mouvement ou ayant une hauteur maximale limitée dans une première zone de surveillance (A1) de ladite zone avant externe ; et
- un deuxième sous-système de détection étant différent et apte, au moins, à détecter la présence d'objets (02) dans une deuxième zone de surveillance (A2) de ladite zone avant externe et à obtenir des informations relatives à, au moins, l'encombrement, c'est-à-dire le volume desdits objets (02) étant présents dans ladite deuxième zone de surveillance (A2), où ledit deuxième sous-système de détection se concentre sur la détection d'obstacles dont l'encombrement ne permet pas de passer par-dessus ceux-ci y pourrait causer des dommages structurels au véhicule et comprend au moins un dispositif de détection étant apte à obtenir de l'extérieur des signes d'information indiquant une présence et étant de la sorte représentatifs de l'existence d'un ou plusieurs objets (02) dans ladite deuxième zone de surveillance (A2) y d'au moins l'encombrement dudit ou desdits objets , et un système électronique comprenant au moins un système pour traiter et analyser des signaux d'entrée obtenus par le biais dudit dispositif de détection et représentatifs desdits signes, ledit système électronique étant apte à générer des signaux de sortie en fonction du résultat de ladite analyse ;
ledit système pour la détection d'objets étant **caractérisé en ce que** ledit dispositif de détection est une caméra apte à capturer des images étant représentatives de la présence dudit ou desdits objets (02) dans ladite deuxième zone de surveillance (A2) à partir d'au moins deux positions différentes étant suffisamment éloignées entre elles et non alignées avec l'objet ou les objets (02) de manière a produire un parallaxe, et **en ce que** ledit système électronique est apte à reconnaître le volume dudit ou desdits objets (02) sur la base desdites images.

2. Système selon la revendication 1, **caractérisé en ce que** ladite caméra est montée sur un dispositif mobile étant à son tour monté sur ledit véhicule pour ainsi permettre que la caméra capture lesdites images à partir desdites au moins deux positions même avec le véhicule dans une position complètement à l'arrêt.

3. Système selon la revendication 2, **caractérisé en ce que** ledit dispositif mobile est monté sur ledit véhicule pour ainsi permettre que la caméra se déplace le long d'un axe horizontal.

4. Système selon la revendication 1, **caractérisé en ce que** ledit premier sous-système de détection comprend au moins un dispositif de détection étant apte à obtenir de l'extérieur des signes d'information indiquant une présence et étant de la sorte représentatifs de l'existence d'un ou plusieurs objets (O1) dans ladite première zone de surveillance (A1), et un système électronique comprenant au moins un système pour traiter et analyser des signaux d'entrée étant obtenus par le biais dudit au moins un dispositif de détection et représentatifs desdits signes, ledit système électronique étant adapté pour générer des signaux de sortie en fonction du résultat de ladite analyse.

5. Système selon la revendication 4, **caractérisé en ce que** ledit dispositif de détection est un dispositif de détection électromagnétique.

6. Système selon la revendication 5, **caractérisé en ce que** ledit dispositif de détection électromagnétique est une caméra.

7. Système selon la revendication 4, **caractérisé en ce que** ledit dispositif de détection est un dispositif de détection de distorsion de champ magnétique.

8. Système selon la revendication 6 ou 7, **caractérisé en ce que** ladite première zone de surveillance (A1) s'étend au moins du sol jusqu'à une hauteur de détection minimale prédéterminée (H1).

9. Système selon la revendication 8, **caractérisé en ce que** ladite hauteur de détection minimale prédéterminée (H1) est ajustée pour détecter la présence de piétons (O1).

10. Système selon la revendication 1, **caractérisé en ce que** lesdites deux zones de surveillance (A1) et (A2) comprennent une partie de chevauchement.

11. Système selon la revendication 1, **caractérisé en ce qu'**au moins le système de traitement et d'analyse d'un desdits premier et deuxième sous-systèmes de détection est apte à traiter des signaux d'entrée selon au moins deux algorithmes de traitement.

12. Système selon la revendication 4, **caractérisé en ce que** ledit système de traitement et d'analyse dudit premier sous-système de détection est apte à traiter lesdits signaux d'entrée selon un algorithme de reconnaissance de patrons.
